# EUROPÄISCHE PATENTANMELDUNG

(11) **EP 4 375 259 A1**
(43) Veröffentlichungstag der Anmeldung: **29.05.2024**
(21) Anmeldenummer: 23210289.7
(22) Anmeldetag: 16.11.2023
(51) Int. Cl.: C04B 28/18

(54) **KALKSANDSTEIN-FORMKÖRPER UND VERFAHREN ZU DESSEN HERSTELLUNG**

(30) Priorität: 22.11.2022 DE 202022106522 U
(71) Anmelder: Rodgauer Baustoffwerke GmbH & Co. KG, 63110 Rodgau-Dudenhofen (DE)
(72) Erfinder: Neumann, Frank, 65232 Taunusstein (DE); Warken, Sebastian, 63743 Aschaffenburg-Schweinheim (DE)
(74) Vertreter: Keil & Schaafhausen Patentanwälte PartGmbB

(57) **Zusammenfassung**

Die vorliegende Erfindung betrifft einen hydrothermal gehärteten Kalksandstein-Formkörper sowie ein Verfahren zur Herstellung eines solchen Kalksandstein-Formkörpers. Ein Kalksandstein-Formkörper, bei dem die CO₂-Emissionen aus Rohstoffgewinnung und Produktion deutlich reduziert sind, kann durch Hydrothermalhärtung einer geformten Rohstoffmischung hergestellt werden, die
(a) 3,5 Gew.-% bis weniger als 5 Gew.-% CaO einer CaO-Komponente,
(b) 50 Gew.-% bis 87,5 Gew.-% SiO₂ einer SiO₂-Komponente,
(c) 9 Gew.-% bis 13 Gew.-% Wasser und
(d) 0 Gew.-% bis 30 Gew.-% nicht natürlicher kieselsäurehaltiger Stoffe aufweist, wobei die Brutto-Trockenrohdichte des Kalksandstein-Formkörpers 1,81 kg/dm³ bis 2,00 kg/dm³ (nach DIN 20000-402:2017-01) und der Mindestwert der umgerechneten mittleren Steindruckfestigkeit des Kalksandstein-Formkörpers 20 N/mm² (nach DIN 20000-402:2017-01) beträgt.

## Beschreibung

Die vorliegende Erfindung betrifft einen hydrothermal gehärteten Kalksandstein-Formkörper sowie ein Verfahren zur Herstellung eines solchen Kalksandstein-Formkörpers.

Derartige Kalksandsteine sind künstlich hergestellte Mauersteine aus Kalksandmaterial. Sie werden hergestellt durch Mischen mindestens einer SiO₂-Komponente, z.B. Quarzsand, mindestens einer CaO-Komponente, z.B. Branntkalk und/oder Kalkhydrat und Wasser zu einer formbaren Frischmasse. Aus der Frischmasse werden Formkörperrohlinge bzw. Steinrohlinge, geformt, insbesondere gepresst, die zur Aushärtung in einem Autoklav hydrothermal behandelt werden. Im Gegensatz zu der Herstellung von Porenbetonmaterial enthält die Frischmasse von Kalksandsteinen weder einen Poren- oder Schaumbildner noch vorgefertigten Schaum. Die hydrothermale Härtung erfolgt in der Regel unter Sattdampfbedingungen bei 14-16 bar für 5 bis 16 Stunden, insbesondere 6 bis 12 Stunden. Dabei reagiert die CaO-Komponente mit der SiO₂-Komponente unter Bildung von Calciumsilikathydratphasen (CSH-Phasen), unter anderem zu 11Å-Tobermorit. Bei der hydrothermalen Härtung wird die Kieselsäure an der Oberfläche der Körner der SiO₂-Komponente(n) gelöst und reagiert mit dem Kalk. Hydrothermal gehärtete Kalksandsteine enthalten somit eine Bindematrix aus Calciumsilikathydratphasen, welche die oberflächlich reagierten Körner der SiO₂-Komponente(n) miteinander verkittet bzw. verbindet.

Aus der DE 10 2004 017 199 A1 ist ein Kalksandmaterial bekannt, das aus einer Rohstoffmischung hergestellt ist, die 5 bis 15 Gew.-% einer CaO-Komponente, 3 bis 10 Gew.-% einer SiO₂-Komponente, 35 bis 50 Gew.-% Porenbetonmehl, Schaumbetonmehl und/oder Flugasche sowie 35 bis 50 Gew.-% Bims enthalten kann. In den Ausführungsbeispielen der DE 10 2004 017 199 A1 werden, bezogen auf die Trockenmischung der Komponenten entweder 7 Gew.-% Branntkalk oder 14 Gew.-% Kalkhydrat verwendet. Dies soll zu einer Rohdichte von 1,0 bis 1,5 kg/dm³, einer Druckfestigkeit von 15 bis 30 N/mm² und einer Wärmeleitfähigkeit von 0,23 bis 0,36 W/(mK) führen.

Ein gegenüber diesem Kalksandmaterial wärmetechnisch optimierter Kalksandstein wird in der DE 10 2020 209 454 A1 vorgeschlagen, der aus einer trockenen Rohstoffmischung herstellbar ist, die 13 bis 22 Gew.-% einer Kalkkomponente (in den Ausführungsbeispielen 19,5 Gew.-% Kalkhydrat), 18 bis 26 Gew.-% gemahlenen Quarz, 15 bis 20 Gew.-% Poren- oder Schaumbetongranulat, 18 bis 26 Gew.-% Bimssteingranulat und 18 bis 25 Gew.-% Blähtongranulat aufweist. Dies soll ebenfalls zu einer Trockenrohdichte von 1,0 bis 1,5 kg/dm³, einer Druckfestigkeit von 15 bis 30 N/mm² und einer Wärmeleitfähigkeit von 0,23 bis 0,36 W/(mK) führen.

Neben einer ausreichenden Druckfestigkeit (und einer möglichst geringen Wärmeleitfähigkeit) ist der Klimaschutz und dabei insbesondere die Verringerung der CO₂-Emissionen ein wichtiges Ziel der Kalksandsteinindustrie. Kalksandsteinwerke gewinnen den Hauptrohstoff Sand meist aus eigenen Sandvorkommen in nächster Nähe zum Werk. Auch der benötigte Kalk kommt meist aus heimischer Produktion. Nach der aktuellen Umweltdeklaration (EPD) liegt der ökologische Fußabdruck des Baustoffs Kalksandstein bei 125 kg CO₂-Äquivalenten pro t Kalksandstein. Von diesen CO₂-Emissionen, die der Kalksandsteinindustrie zugerechnet werden, sind dabei heute gerade einmal 20 Prozent im Produktionsprozess begründet. Die restlichen knapp 80 Prozent kommen durch die Verwendung des Rohstoffs Kalk hinzu (vgl. https-//www.kalksandstein.de/media/u-ser upload/roadmap_kalksandsteinindustrie_kurzfassung.pdf).

Es ist bekannt, dass bei herkömmlichem Kalksandstein über eine Lebensdauer von 50 Jahren durch Recarbonatisierung ca. 50 kg CO₂-Äquivalente pro t Kalksandstein gebunden werden können. So wurde bei Untersuchungen herausgefunden, dass Kalksandsteine das aufgenommene CO₂ chemisch in ihr kristallines Gefüge einbinden. Durch diese dauerhafte Speicherung tritt das CO₂ also auch bei einem Abbruch eines Gebäudes nicht aus dem Material aus. Im Falle des Kalksandsteins wird diese CO₂-Speicherfähigkeit durch das Bindemittel Branntkalk erzeugt, das aus natürlichem Kalk (Calciumkarbonat) gewonnen wird. Während der Herstellung von Kalksandsteinen werden Branntkalk und Sand etwa im Verhältnis 1:12 gemischt und mit Wasser vermengt. Der Branntkalk wird dabei zu Kalkhydrat abgelöscht. Beim Autoklavieren reagiert das Kalkhydrat mit der gelösten Kieselsäure des Sandes zu Calciumsilikathydraten, sogenannten CSH-Phasen. Dringt das in der Umgebungsluft vorhandene Kohlenstoffdioxid während der Nutzungsdauer des Kalksandsteins in seinen Porenraum ein, reagiert es dort mit der Zeit mit Anteilen der CSH-Phasen zu Calciumkarbonat, also zu dem Ausgangsstoff des Kalkkreislaufs. Eine wünschenswerte hohe Recarbonatisierung setzt daher voraus, dass bei der Herstellung von Kalksandstein ausreichend viel Branntkalk verwendet wird, um die CSH-Phasen zu erzeugen.

Aufgabe der vorliegenden Erfindung ist es, einen Kalksandstein-Formkörper sowie ein Verfahren zu seiner Herstellung bereitzustellen, bei denen die CO₂-Emissionen aus Rohstoffgewinnung und Produktion reduziert werden.

Diese Aufgabe wird mit einem Kalksandstein-Formkörper nach Anspruch 1 und ein Verfahren nach Anspruch 10 gelöst.

Der Erfindung liegt dabei der Gedanke zu Grunde, dass die CO₂-Emissionen besonders wirksam reduziert werden können, wenn die Verwendung des Rohstoffs Kalk minimiert wird. Eine Reduzierung der Menge der eingesetzten CaO-Komponente bewirkt eigentlich eine Verringerung der Druckfestigkeit und mindert die Fähigkeit des Kalksandsteins zur Recarbonatisierung, wirkt sich also negativ auf die CO₂-Gesamtbilanz aus. Überraschend wurde jedoch festgestellt, dass eine Absenkung des Anteils der CaO-Komponente auf 3,5 Gew.-% bis weniger als 5 Gew.-% der Rohstoffmischung bei einer gleichzeitigen Erhöhung des Anteils der SiO₂-Komponente auf 50 Gew.-% bis 87,5 Gew.-% der Rohstoffmischung die Herstellung von Kalksandsteinen mit einer ausreichenden Druckfestigkeit erlaubt. So kann mit dieser Zusammensetzung der Rohstoffmischung ein Kalksandstein-Formkörper der Druckfestigkeitsklasse 16, d.h. mit einem Mindestwert der umgerechneten mittleren Steindruckfestigkeit des Kalksandstein-Formkörpers von 20 N/mm² (nach DIN 20000-402:2017-01), und der Rohdichteklasse 2,0, d.h. mit einer Brutto-Trockenrohdichte des Kalksandstein-Formkörpers von 1,81 kg/dm³ bis 2,00 kg/dm³ (nach DIN 20000-402:2017-01), hergestellt werden.

Eine besonders nachhaltige Herstellung derartiger Kalksandstein-Formkörper kann dadurch erreicht werden, dass der Rohstoffmischung bis 30 Gew.-% nicht natürlicher kieselsäurehaltiger Stoffe in Form von Recyclingmaterial beigemischt werden, die die SiO₂-Komponente teilweise ersetzen. Die Anteile der CaO-Komponente, der SiO₂-Komponente und der optional vorgesehenen nicht natürlichen kieselsäurehaltigen Stoffe werden dabei unter Beibehaltung des Anteils der CaO-Komponente von 3,5 Gew.-% bis weniger als 5 Gew.-% der Rohstoffmischung auf 100 % der Trockenrohstoffmischung eingestellt.

Zur Herstellung der erfindungsgemäßen Kalksandstein-Formkörper werden zunächst die SiO₂-Komponente, die optional vorgesehenen nicht natürlichen kieselsäurehaltigen Stoffe sowie die CaO-Komponente miteinander vermischt und 9 Gew.-% bis 13 Gew.-%, vorzugsweise 10 Gew.-% bis 12 Gew.-%, insbesondere etwa 11 Gew.-%, Wasser zugegeben und intensiv weiter gemischt. Vorzugsweise wird diese Rohstoffmischung für mindestens 2 Minuten bis maximal 5 Minuten intensiv vermischt. Die Rohstoffmischung wird anschließend verdichtet, vorzugsweise mit einem Pressdruck von 120 bar bis 200 bar, zu einem Formkörperrohling, vorzugsweise zu einem Formsteinrohling, geformt und unter Sattdampfdruck, d.h. hydrothermal in einem Autoklaven, gehärtet. Zur Herstellung von Kalksandsteinen wird auf die Publikation "KALKSANDSTEIN - Maurerfibel" 9. Auflage (Stand: 01/2019) des Bundesverbands Kalksandsteinindustrie e.V. verwiesen, die das Härten der Rohlinge unter geringem Energieaufwand bei Temperaturen von ca. 200 °C unter Wasserdampf-Sättigungsdruck für etwa vier bis zwölf Stunden empfiehlt. Um die oben genannten Produkteigenschaften zu erhalten, hat es sich als besonders vorteilhaft erwiesen, wenn die Autoklavierung eine Haltephase von wenigstens einer Stunde bei 12 bar umfasst, wobei Druck und Temperatur über eine Treppenkurve in einer Auffahrphase stufenweise erhöht und nach der Haltephase in einer Abfahrphase stufenweise gesenkt werden.

Die CO₂-Emissionen können weiter minimiert werden, wenn die bei der Autoklavierung anfallende Wärmeenergie im Produktionsprozess weiter genutzt wird.

Der Anteil der CaO-Komponente in der Rohstoffmischung beträgt vorzugsweise mindestens 4 Gew.-%, insbesondere etwa 4,5 Gew.-%. Die CaO-Komponente kann dabei insbesondere Branntkalk sein.

Der Anteil der SiO₂-Komponente in der wässrigen Rohstoffmischung beträgt vorzugsweise 83,5 Gew.-% bis 85,5 Gew.-%, insbesondere etwa 84,5 Gew.-%, sofern kein Recyclingmaterial in Form nicht natürlicher kieselsäurehaltiger Stoffe zugegeben wird. Andernfalls reduziert sich der Anteil der SiO₂-Komponente entsprechend. Die SiO₂-Komponente kann Quarzkies oder -splitt, Quarzsand, Lösssand und/oder Quarzmehl aufweisen. Nach einem Ausführungsbeispiel kann die SiO₂-Komponente zu 22 % in einer Körnung von 8 bis 16 mm, zu 8 % in einer Körnung von 2 bis 8 mm, zu 55 % in einer Körnung von 0 bis 2 mm und zu 15 % in einer Körnung von 0 bis 1 mm vorliegen.

Wenn der Rohstoffmischung nicht natürliche kieselsäurehaltige Stoffe, insbesondere in Form von Recyclingmaterial, beigemischt wird, kann die geformte Rohstoffmischung 0 Gew.-% bis 30 Gew.-% gebrochenes und/oder gemahlenes Kalksandsteinmaterial mit einer Körnung von 0 bis 3 mm und/oder 0 Gew.-% bis 25 Gew.-% Porenbetonmehl mit einer Körnung von 0 bis 1 mm aufweisen. Bei diesem Kalksandsteinmaterial bzw. Porenbetonmehl kann es sich um Produktionsrückstände handeln, deren Verwertung in der Rohstoffmischung den Anteil der SiO₂-Komponente reduziert, wodurch sich ebenfalls CO₂-Emissionen einsparen lassen.

Durch die erfindungsgemäße Reduzierung des Anteils der CaO-Komponente sowie durch weitere optionale Maßnahmen wie die Wärmerückgewinnung aus der Autoklavierung und/oder den Einsatz von Recyclingmaterial lässt sich der ökologische Fußabdruck des Kalksandstein-Formkörpers erheblich reduzieren. Es wird besonders bevorzugt, wenn das Herstellungsverfahren durch die oben genannten Maßnahmen derart eingestellt ist, dass der ökologische Fußabdruck aus Rohstoffgewinnung und Produktion gemäß Umweltdeklaration (EPD) kleiner als 70 kg CO₂-Äquivalent pro t des Kalksandstein-Formkörpers ist. Durch die CO₂-Aufnahmefähigkeit des Kalksandsteins kann dieser Wert, über die Lebenszeit des Kalksandstein-Formkörpers betrachtet, weiter gesenkt werden.

Die Vorteile des erfindungsgemäßen Kalksandstein-Formkörpers sowie des entsprechenden Herstellungsverfahrens werden nachfolgend anhand eines Ausführungsbeispiels verdeutlicht. Als Vergleichsbeispiel wird das Beispiel 1 aus der DE 10 2004 017 199 B4 herangezogen, wobei von einer Wassermenge von 19 Gew.-% bezogen auf die Trockenmasse ausgegangen wird und die Feststoff-Anteile zur Vergleichbarkeit mit den erfindungsgemäßen Beispielen entsprechend auf die Rohstoffmischung umgerechnet wurden.

| | Vergleichsbeispiel | erfindungsgemäßes Beispiel |
|---|---|---|
| SiO₂ | 75,3 Gew.-% | 84,5 Gew.-% |
| Branntkalk | 5,7 Gew.-% | 4,5 Gew.-% |
| KS-Material | - | - |
| Porenbetonmehl | - | - |
| Wasser | 19 Gew.-% | 11 Gew.-% |
| Druckfestigkeit | 28 N/mm² | 20,08 N/mm² |
| Rohdichte | 1,80 kg/dm³ | 1,87 kg/dm³ |

In dem erfindungsgemäßen Beispiel ist dabei als CaO-Komponente jeweils Branntkalk CL 90 mit einer Reaktivität t₆₀ von ca. 2 min eingesetzt worden. Als SiO₂-Komponente wurde ein Zuschlag bestehend aus: 22 % Körnung 8-16 mm; 8 % Körnung 2-8 mm; 15 % quarzitischem Brechsand 0-2 mm; 15 % Lösssand 0-1 mm; 40 % Flussand 0-2 mm verwendet. Optional kann in weiteren erfindungsgemäßen Beispielen gebrochenes Kalksandsteinrückgut mit einer Körnung von 0 bis 3 mm als Kalksandsteinmaterial und/oder Porenbetonmehl mit einer Körnung von 0 bis 1 mm verwendet werden. Bei der Autoklavierung wurde bei dem erfindungsgemäßen Beispiel eine Treppenkurve mit 60 min Haltephase bei 12 bar gefahren.

Die Druckfestigkeit ist der Mindestwert der umgerechneten mittleren Steindruckfestigkeit des Kalksandstein-Formkörpers nach DIN 20000-402:2017-01 und die Rohdichte ist die Brutto-Trockenrohdichte des Kalksandstein-Formkörpers nach DIN 20000-402:2017-01.

Für das erfindungsgemäße Beispiel wurde die CO₂-Emission bilanziert und betrug für die Rohstoffgewinnung der CaO-Komponente 46,4 kg CO₂-Äquivalent pro t und für die Produktion 23,2 kg CO₂-Äquivalent pro t, so dass die Gesamtemission bei 69,6 kg CO₂-Äquivalent pro t des Kalksandstein-Formkörpers lag.

## Patentansprüche

1. Kalksandstein-Formkörper hergestellt durch Hydrothermalhärtung einer geformten Rohstoffmischung, die
(a) 3,5 Gew.-% bis weniger als 5 Gew.-% CaO einer CaO-Komponente,
(b) 50 Gew.-% bis 87,5 Gew.-% SiO₂ einer SiO₂-Komponente,
(c) 9 Gew.-% bis 13 Gew.-% Wasser und
(d) 0 Gew.-% bis 30 Gew.-% nicht natürlicher kieselsäurehaltiger Stoffe aufweist,
wobei die Brutto-Trockenrohdichte des Kalksandstein-Formkörpers 1,81 kg/dm³ bis 2,00 kg/dm³ (nach DIN 20000-402:2017-01) und der Mindestwert der umgerechneten mittleren Steindruckfestigkeit des Kalksandstein-Formkörpers 20 N/mm² (nach DIN 20000-402:2017-01) beträgt.

2. Kalksandstein- Formkörper nach Anspruch 1, **dadurch gekennzeichnet, dass** der Anteil der CaO-Komponente in der geformten Rohstoffmischung mindestens 4 Gew.-%, insbesondere etwa 4,5 Gew.-% beträgt.

3. Kalksandstein-Formkörper nach Anspruch 2, **dadurch gekennzeichnet, dass** die CaO-Komponente Branntkalk ist.

4. Kalksandstein-Formkörper nach einem der vorhergehenden Ansprüche, **dadurch gekennzeichnet, dass** der Anteil der SiO₂-Komponente in der geformten Rohstoffmischung 83,5 Gew.-% bis 85,5 Gew.-%, insbesondere etwa 84,5 Gew.-% beträgt.

5. Kalksandstein-Formkörper nach Anspruch 4, **dadurch gekennzeichnet, dass** die SiO₂-Komponente Quarzkies oder -splitt, Quarzsand, Lössand und/oder Quarzmehl aufweist.

6. Kalksandstein-Formkörper nach Anspruch 5, **dadurch gekennzeichnet, dass** die SiO₂-Komponente zu 22 % in einer Körnung von 8 bis 16 mm, zu 8 % in einer Körnung von 2 bis 8 mm, zu 55 % in einer Körnung von 0 bis 2 mm und zu 15 % in einer Körnung von 0 bis 1 mm vorliegt.

7. Kalksandstein-Formkörper nach einem der vorhergehenden Ansprüche, **dadurch gekennzeichnet, dass** der Wasser-Anteil in in der geformten Rohstoffmischung 10 Gew.-% bis 12 Gew.-%, insbesondere etwa 11 Gew.-% beträgt.

8. Kalksandstein-Formkörper nach einem der vorhergehenden Ansprüche, **dadurch gekennzeichnet, dass** die geformte Rohstoffmischung 0 Gew.-% bis 30 Gew.-% gebrochenes und/oder gemahlenes Kalksandsteinmaterial mit einer Körnung von 0 bis 3 mm und/oder 0 Gew.-% bis 25 Gew.-% Porenbetonmehl mit einer Körnung von 0 bis 1 mm als die nicht natürlichen kieselsäurehaltigen Stoffe aufweist.

9. Kalksandstein-Formkörper nach einem der vorhergehenden Ansprüche, **dadurch gekennzeichnet, dass** die CO₂-Emission aus Rohstoffgewinnung und Produktion weniger als 70 kg CO₂-Äquivalent pro t des Kalksandstein-Formkörpers ist.

10. Verfahren zur Herstellung eines Kalksandstein-Formkörpers mit folgenden Schritten:
- Bereitstellen einer Rohstoffmischung, die
(a) 3,5 Gew.-% bis weniger als 5 Gew.-% CaO einer CaO-Komponente,
(b) 50 Gew.-% bis 87,5 Gew.-% SiO₂ einer SiO₂-Komponente,
(c) 9 Gew.-% bis 13 Gew.-% Wasser und
(d) 0 Gew.-% bis 30 Gew.-% nicht natürlicher kieselsäurehaltiger Stoffe aufweist,
- Verdichten der Rohstoffmischung zu einem Formkörperrohling,
- Hydrothermalhärtung des Formkörperrohlings in einem Autoklaven mit einer Haltephase von wenigstens einer Stunde bei 12 bar, wobei Druck und Temperatur über eine Treppenkurve in einer Auffahrphase stufenweise erhöht und nach der Haltephase in einer Abfahrphase stufenweise gesenkt werden.

11. Verfahren nach Anspruch 10, **dadurch gekennzeichnet, dass** zunächst die SiO₂-Komponente, die optional vorgesehenen nicht natürlichen kieselsäurehaltigen Stoffe sowie die CaO-Komponente miteinander vermischt werden und 10 Gew.-% bis 12 Gew.-%, insbesondere etwa 11 Gew.-%, Wasser zugegeben wird und für mindestens 2 Minuten bis maximal 5 Minuten intensiv weiter gemischt wird.

12. Verfahren nach Anspruch 10 oder 11, **dadurch gekennzeichnet, dass** der Anteil der CaO-Komponente in der geformten Rohstoffmischung mindestens 4 Gew.-%, insbesondere etwa 4,5 Gew.-% beträgt, und dass die CaO-Komponente Branntkalk ist.

13. Verfahren nach einem der Ansprüche 10 bis 12, **dadurch gekennzeichnet,** der Anteil der SiO₂-Komponente in der geformten Rohstoffmischung 83,5 Gew.-% bis 85,5 Gew.-%, insbesondere etwa 84,5 Gew.-% beträgt, und dass die SiO₂-Komponente Quarzkies oder -splitt, Quarzsand, Lössand und/oder Quarzmehl aufweist, wobei die SiO₂-Komponente zu 22 % in einer Körnung von 8 bis 16 mm, zu 8 % in einer Körnung von 2 bis 8 mm, zu 55 % in einer Körnung von 0 bis 2 mm und zu 15 % in einer Körnung von 0 bis 1 mm vorliegt.

14. Verfahren nach einem der Ansprüche 10 bis 13, **dadurch gekennzeichnet, dass** die bei der Autoklavierung anfallende Wärmeenergie im Produktionsprozess weiter genutzt wird.
